# NEUE EUROPÄISCHE PATENTSCHRIFT

(11) **EP 0 720 883 B2**
(45) Veröffentlichungstag und Bekanntmachung des Hinweises auf die Entscheidung über den Einspruch: **15.06.2005**
(45) Hinweis auf die Patenterteilung: 01.09.1999
(21) Anmeldenummer: 95120291.0
(22) Anmeldetag: 21.12.1995
(51) Int. Cl.: B23D 37/00, B23C 3/06

(54) **Verfahren und Vorrichtung zum Bearbeiten von Werkstücken mit exzentrischen, im wesentlichen rotationssymmetrischen Werkstückflächen**
Method and device for working pieces with eccentric mainly rotation symmetric surfaces
Méthode et dispositif à travailler des pièces à surfaces excentriques principalement à surface de rotation

(30) Priorität: 23.12.1994 DE 4446475
(43) Veröffentlichungstag der Anmeldung: 10.07.1996
(73) Patentinhaber: BOEHRINGER WERKZEUGMASCHINEN GmbH, D-73033 Göppingen (DE)
(72) Erfinder: Horsky, Anton, 73117 Wangen (DE); Kohlhase, Matthias, 78713 Schramberg-Sulgen (DE); Schrod, Hans, 73035 Göppingen-Faurndau (DE); Santorius, Rolf, 73066 Uhingen-Nassachmühle (DE); Schapf, Paul Dieter, 73114 Schlat (DE); Voss, Wolf-Dietrich, 73087 Boll (DE)
(74) Vertreter: Alber, Norbert, Dipl.-Ing.

(56) Entgegenhaltungen:
- EP-A- 0 417 446
- EP-A1- 0 018 000
- WO-A1-85/04126
- DE-A1- 3 831 613
- DE-B- 1 236 303
- GB-A- 191 103 643
- US-A- 2 126 462
- DIN 69844, Teil2, November 1987, Seite 5-8
- DIN 1880, Teil 2, Dezember 1981, Seite 3
- König/Wand "Fräsen statt Drehen : Drefräsen", Industrieanzeiger Nr. 12 vom 11.02.1986
- Prospekt Fa. Heyligenstaedt : Aus Freude am Drehen "Die HEYNUMATen", Dricknummer 15 001 292
- Dubbel, Taschenbuch für den Maschinenbau, 17 Aufl. 1990, Kapitel S 4.2.4 : Fräsen, Seite S45
- König, "Fertigungsverfahren", 1990, Bd1 , Kap. 8.2.2.8, Drehfräsen, Seite 310-314
- Machinery and production engineering, August 1987, Seite 293

## Beschreibung

Die Erfindung betrifft ein Verfahren zum Bearbeiten von Werkstücken wie gemäß dem Oberbegriff der Patentanspruchs 1 und eine Maschine gemäß dem Oberbegriff des Patentanspruchs 9 und wie z.B. aus AT-B-286067 bekannt ist.

Da eine Kurbelwelle ein sehr typisches derartiges Werkstück ist, wird dieses Werkstück in der folgenden Beschreibung durchgängig beispielhaft benutzt, ohne daß die Anwendung der Erfindung hierauf beschränkt sein soll. Insbesondere ist die Erfindung auch für nicht rotationssymmetrische Flächen, wie etwa die Nocken einer Nockenwelle, ebenso anwendbar.

Bei der Kurbelwellenbearbeitung ist die Bearbeitung der zentrisch liegenden Hauptlagerstellen von der der exzentrisch liegenden Hublagerstellen zu unterscheiden.

Als Bearbeitungsverfahren für die Herstellung der Kurbelwellen ist neben dem konventionellen Drehen, dem sogenannten Wirbeln (Fräsen mit die Kurbelwelle umfassenden, innen verzahnten ringförmigen Fräsern) vor allem das Drehräumen (ein gebogenes Räumwerkzeug schwenkt parallel neben der rotierenden Kurbelwelle) und das Dreh-Drehräumen (das schwenkbare Drehräum-Werkzeug wird ohne gleichzeitige Schwenkbewegung im reinen Einstichverfahren wie ein Drehwerkzeug für bestimmte Arbeitsschritte benutzt, im Wechsel mit Drehräum-Bearbeitung) bekannt.

Dabei (z. B. EP-A-0 417 446) können Hublager-Zapfen ebenso wie die Hauptlager-Zapfen bearbeitet werden, wenn die Kurbelwelle zu diesem Zweck exzentrisch gespannt wird, also so, daß die Spindelachse der antreibenden Werkzeugspindeln (in der Regel ist die Kurbelwelle beidseits in jeweils einem Spindelstock und Spannfutter aufgenommen) mit der Achse der zu bearbeitenden rotationssymmetrischen Fläche, also der Mitte des Hublagerzapfens, zusammenfällt. Der Hauptlager-Zapfen, also die Mitte der Kurbelwelle, rotiert dabei exzentrisch um die Spindelachse.

Der Nachteil dieser Vorgehensweise liegt darin, daß zum einen ein Umspannen von zentrischer auf exzentrische Spannung für das Fertigbearbeiten einer Kurbelwelle notwendig ist, und zum anderen die für die exzentrische Spannung verwendeten Spannfutter einerseits mit Preisen im sechsstelligen DM-Bereich sehr teuer sind und andererseits in der Regel nur für eine bestimmte Kurbelwellenform und Kurbelwellengröße benutzbar sind.

Weiterhin ist es aus der AT-PS 286067 oder DE-B-12 36 303 bereits bekannt, die exzentrischen Werkstückflächen eines Werkstückes wie etwa einer Kurbelwelle mittels der Stirnfläche eines Stirnfräsers zu bearbeiten, dessen Rotationsachse quer zur Längsachse des Werkstückes, also der Spindelachse, angeordnet ist, zusätzlich können dabei die Wangenflächen der Kurbelwelle durch die Mantelflächen des Fräsers bearbeitet werden.

Diese Lösung offenbart jedoch keine Möglichkeit, ein Werkstück in einer Aufspannung spanend fertig zu bearbeiten, und es wird kein Weg aufgezeigt, wie die Verformung des Werkstückes durch die beim spanenden Bearbeiten auftretenden Kräfte minimiert werden kann. Weiterhin ist bei der genannten Lösung die Bewegung des Fräsers auf Linearbewegungen in X- und Y-Richtung beschränkt.

Auch der Prospekt "Aus Freude am Drehen - die Heynumaten" der Firma Heyligenstaedt aus dem Jahr 1992 zeigt das Drehfräsen an einer exzentrischen Fläche einer Kurbelwelle, wobei die Rotationsachse des Fräsers quer zur Rotationsachse der Kurbelwelle steht. Eine Drehräum- oder Dreh-Drehräumeinheit ist an dieser Maschine jedoch nicht offenbart.

Es ist daher die Aufgabe gemäß der Erfindung, ein Verfahren sowie eine Vorrichtung zur Bearbeitung von Kurbelwellen und ähnlichen Teilen zu schaffen, welches eine schnelle, kostengünstige und maßgenaue Herstellung ermöglicht, und insbesondere geringe Rüstzeiten bei Umstellung auf ein neues Produkt erfordert, und damit insbesondere für die Kleinserien-Herstellung geeignet ist.

Diese Aufgabe ist durch die kennzeichnenden Merkmale des Anspruches 1 und 9 gelöst. Vorteilhafte Ausführungsformen ergeben sich aus den Unteransprüchen.

Durch die Bearbeitung der exzentrisch liegenden, gekrümmten oder gar rotationssymmetrischen Werkstückflächen wie etwa den Hublager-Zapfen mittels eines Stirn-Fräsers, dessen Rotationsachse quer zur Spindel-Achse der Kurbelwelle steht Drehfräsen, ist die Bearbeitung der auf der Hauptlager-Achse gespannten Kurbelwelle auch an den Hublagern möglich, und somit auch eine Fertigbearbeitung, der Kurbelwelle in einer Aufspannung möglich.

Hierfür muß der Stirnfräser, der mit seinen stirnseitigen Schneiden die rotationssymmetrische Fläche und ggf. mit den Schneiden auf seiner Mantelfläche gleichzeitig oder separat die angrenzenden Wangenflächen bearbeitet, mindestens in X-Richtung beweglich sein, und darüber hinaus auch noch in einer weiteren Richtung, nämlich entweder in der Y-Richtung, oder er muß schwenkbar sein um eine Achse parallel zur C-Achse, nämlich um die C2-Achse, und zwar in einem solchen Maße, daß die Längsachse des Fräsers in eine Lage etwa senkrecht auf die zu bearbeitende Stelle ausgerichtet werden kann.

Da die Bearbeitung mittels eines solchen Finger-Fräsers allein schon aufgrund der Stabilität eines solchen Finger-Fräsers nicht so effizient sein kann wie andere Bearbeitungsverfahren, insbesondere Drehräumen und Dreh-Drehräumen, besteht die bevorzugte Lösung darin, eine Kurbelwelle spanend in einer Aufspannung fertig zu bearbeiten, indem die dann zentrisch liegenden Hauptlager-Stellen mit konventionellem effizientem Drehräumen oder Dreh-Drehräumen bearbeitet werden, während die exzentrisch liegenden Hublagerstellen mittels dem vorbeschriebenen Drehfräsen bearbeitet werden.

Ein Vorteil dieser Vorgehensweise liegt darin, daß durch die entsprechende Steuerung der Einzelbewegungen des Fräsers, also die Linearbewegungen in X-und Y-Richtung oder die Linearbewegung in X-Richtung in Kombination mit der Schwenkbewegung um die C2-Achse oder auch noch andere denkbare Bewegungsmöglichkeiten, die jedoch Bewegungskomponenten sowohl in der X-als auch in der Y-Richtung im Ergebnis enthalten müssen, und die selbstverständlich in Abhängigkeit von der Drehlage der Kurbelwelle, also der Position der C-Achse gesteuert werden müssen, ausschließlich durch geänderte Verfahrwege und damit geänderte Programmierung, jedoch mit der gleichen Maschinen- und Werkzeug-Variante bereits eine Vielzahl unterschiedlicher Produkte, also Kurbelwellen mit unterschiedlichen Hub, unterschiedlicher Hubzapfenanzahl etc. hergestellt werden kann. Dies ist insbesondere für die Herstellung von Einzelstücken oder Kleinserien derartiger Produkte sehr sinnvoll.

Ein weiterer Vorteil liegt darin, daß diese Art der Hublager-Bearbeitung für das Werkstück sehr schonend ist. Die bei Bearbeitung der exzentrisch gespannten Hublager bei anderen Bearbeitungsverfahren in die Kurbelwelle eingebrachten Kräfte, insbesondere die Radialkräfte, führen häufig zu Spannungen innerhalb des Werkstückes, die sich erst nach dem Ausspannen des Werkstückes lösen, und dann eine Deformation und Maßungenauigkeit der Kurbelwelle bewirken.

Bei dem erfindungsgemäßen Verfahren ist es möglich, insbesondere die Einleitung von radialen Kräften dadurch zu minimieren, daß der meist die Gestalt eines Finger-Fräsers aufweisende Stirn-Fräser mit seiner Rotationsachse nicht exakt auf die Symmetrielinie der rotationssymmetrischen, zu bearbeitenden Fläche zeigt, mithin also die Rotationsachse des Fräsers nicht exakt senkrecht auf der zu bearbeitenden Stelle steht. Stattdessen wird der Fräser demgegenüber parallel versetzt, so daß eine Bearbeitung vor allem oder ausschließlich im Außenbereich der Stirnfläche des Fräsers stattfindet. Die gesamte Bearbeitungsstelle wird bei einem fortschreitenden Einsatz des Fräsers somit eine bogensegmentförmige Kontur haben, und die Schnittkräfte werden dabei - je nach Winkelgröße dieses Bogens - in einer Tangentialebene zur Mantelfläche des Hublager-Zapfens eingebracht, hier jedoch nicht vorzugsweise quer zur Symmetrielinie des Hublager-Zapfens, sondern hierzu schräg gerichtet, nämlich mit einer erheblichen, meist bestimmenden, Komponente in Längsrichtung der Kurbelwelle, also in Richtung einer Mantellinie des betreffenden Hublager-Zapfens.

Damit kann erreicht werden, daß die Haupteinleitungsrichtung der Bearbeitungskräfte in Längsrichtung der Kurbelwelle stattfindet, und da die Kurbelwelle in dieser Richtung in der Regel stabiler ist als in Querrichtung, resultieren daraus relativ geringe Verformungen der Kurbelwelle durch die Bearbeitung.

Weiterhin ist es sehr vorteilhaft, dabei das Fräsen als sogenanntes Hochgeschwindigkeitsfräsen (HF bzw. HSC = High Speed Cutting) zu betreiben. Dabei wird mit Schnittgeschwindigkeiten von etwa 500 m/min beim Schruppen und um 700 m/min beim Schlichten gearbeitet, und die Schneide des Fräsers besitzt vorzugsweise eine - im Gegensatz zum konventionellen Fräsen - positive Schneidengeometrie. Dies bedeutet, daß der Winkel derjenigen Fläche des Fräsers, die in das Werkstück einfährt, gegenüber der Werkstückoberfläche einen Winkel von etwas mehr als 90° besitzt, im Gegensatz von einem Winkel unter 90° beim konventionellen Fräsen. Das Werkstück würde sich dabei nur mit 4-30 Umdrehungen/min, vorzugsweise mit 4-10 U/min, drehen.

Eine besonders vorteilhafte Lösung besteht darin, auf der Stirnfläche des Fräsers nur vergleichsweise wenige Schneiden, im Idealfall nur eine einzige Schneide anzuordnen. Denn im Gegensatz zu den theoretischen Erwartungen hat sich herausgestellt, daß die bei Fräsbearbeitung typische facettenartige Oberflächenausbildung bei rotationssymmetrischen Flächen primär nicht durch den unterbrochenen Schnitt des Fräsens verursacht werden, sondern offensichtlich dadurch, daß die einzelnen Schneiden eines Fräsers nicht alle in ihrer exakten Soll-Lage Lage justiert sind., Je geringer die Anzahl der Schneiden eines Fräsers, die die gleiche Bearbeitungsstelle schneiden sollen, ist, umso genauer können diese Schneiden in ihre SollPosition eingestellt werden, und umso weniger ausgeprägt sind die Facetten der bearbeiteten rotationssymmetrischen Fläche. Bei nur einer einzigen Schneide am Fräser können überhaupt keine Abweichungen der Ist-Positionen der einzelnen Schneiden des Fräsers mehr vorhanden sein, so daß eine besonders gute Oberflächenqualität erzielt wird.

Einer weitere Möglichkeit besteht darin, wenigstens den Teilbearbeitungsgang des Fräsens als Hartschaftfräsen durchzuführen, also nach der bereits erfolgten Härtung des Werkstückes zumindest im oberflächennahen Bereich.

Auch dabei wird mit einer Schnittgeschwindigkeit von etwa 450 m/min gefräst, wobei die Drehzahl des Fräsers beispielsweise 6000 U/min bei einer PKW-Kurbelwelle als Werkstück beträgt. Bei einem Aufmaß von 0,5 mm ergeben sich bei einer solchen Bearbeitung Formabweichungen der bearbeiteten Lagerstelle von nur 0,2-0,3 µm, so daß unter Umständen vollständig auf eine Nachbearbeitung mittels Schleifen verzichtet werden kann. Dieses Ergebnis ist vorzugsweise wiederum durch Verwendung einer einzigen Schneide an der Stirnseite und/oder Mantelfläche des Fräsers möglich, wobei jedoch wenigstens eine zweite, gegenüberliegende Schneide vorhanden ist, aber durch Zurückversetzen funktionslos gehalten wird, und lediglich zur Ausgleichung der Unwucht dient, die sich durch die einzige zum Einsatz kommende Schneide in der jeweiligen Fräserfläche ergeben würde.

Eine Ausführungsform gemäß der Erfindung ist im folgenden beispielhaft näher beschrieben. Es zeigen:
- Fig. 1: die Bearbeitung mittels Drehfräsen durch lineare X- und Y-Bewegungen,
- Fig. 2: die Bearbeitung mittels X- und C2-Bewegung des Fräsers,
- Fig. 3: eine vergrößerte Detailansicht aus Fig. 1,
- Fig. 3a:: das Einwirken der Schneide des Fräsers auf die Mantelfläche des Hublagerzapfens,
- Fig. 4: eine Darstellung in Blickrichtung der Fräserachse und
- Fig. 5: eine Aufsicht auf eine erfindungsgemäße Maschine.

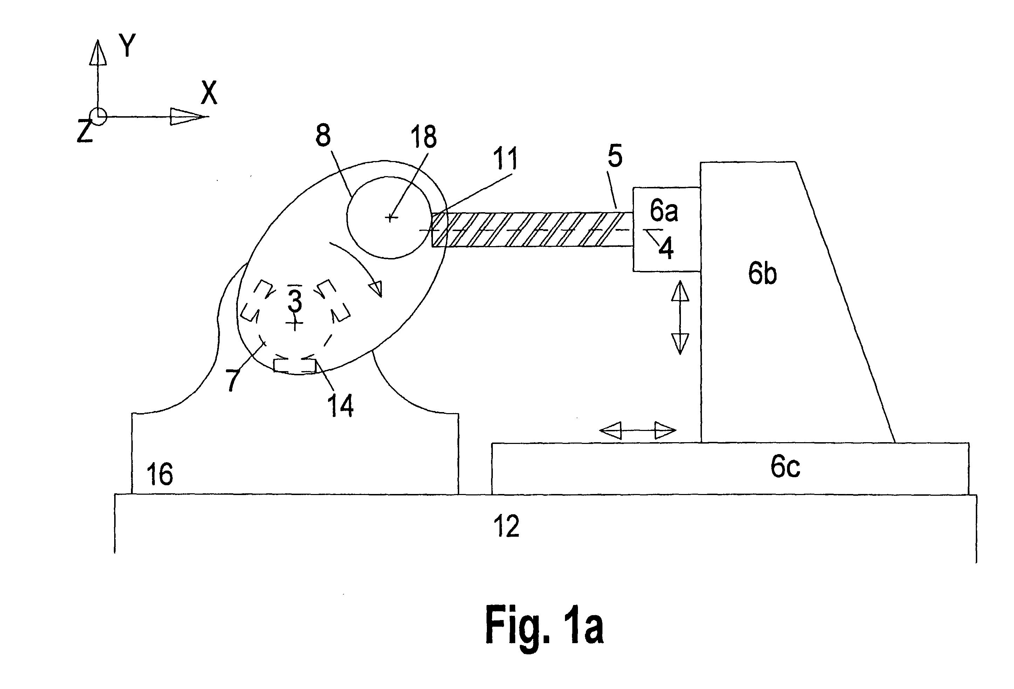

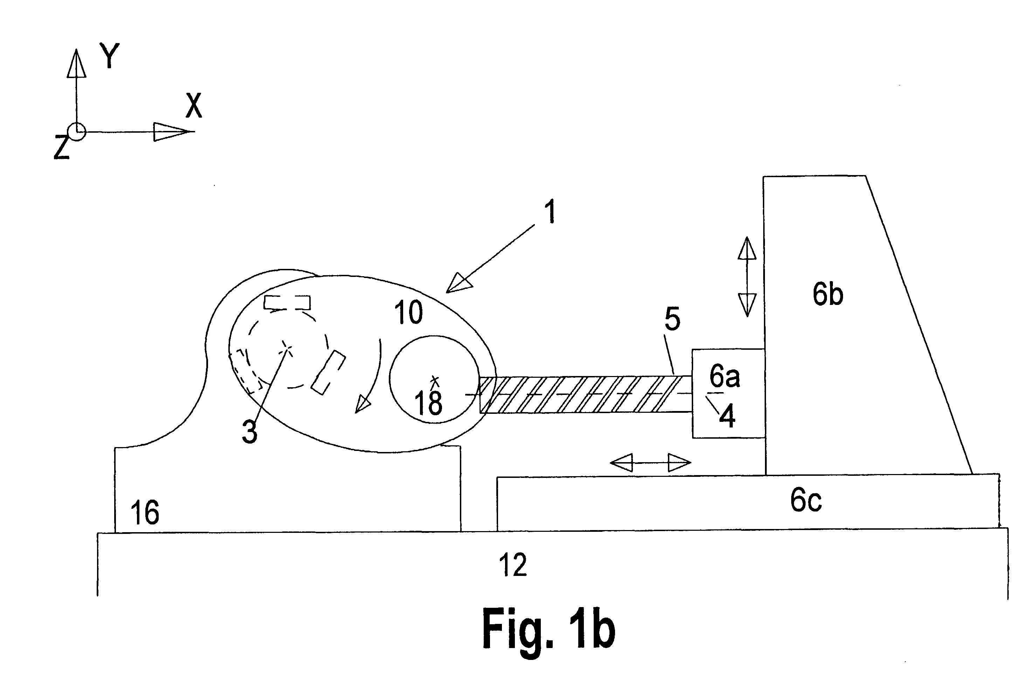

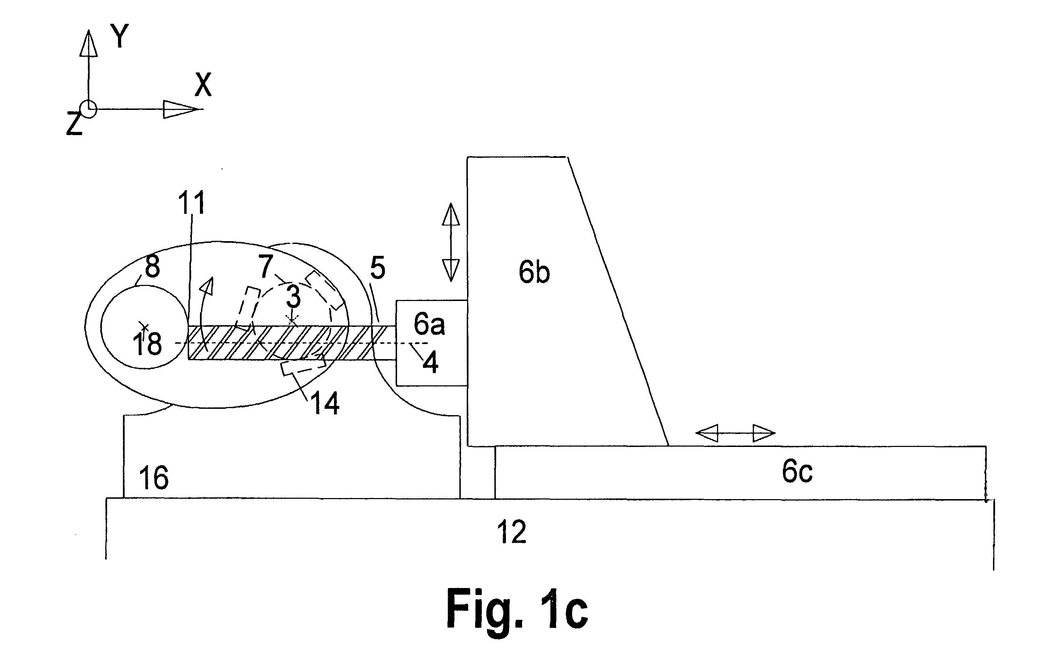

In den Figuren 1 ist - in Blickrichtung der Spindelachse 3 betrachtet - die Bearbeitung eines Hublager-Zapfens mit der Stirnfläche eines Finger-Fräsers 5, der linear sowohl in X- als auch in Y-Richtung verfahrbar ist.

In den Darstellungen der Fig. 1 liegt die Rotationsachse 4 des Fräsers 5 waagerecht, zielt jedoch nicht genau auf die Mitte 18 des Hubzapfens, sondern ist demgegenüber parallel versetzt, so daß die Bearbeitungsstelle 11, also die Kontaktstelle zwischen dem Hublagerzapfen 8 und der Stirnfläche des Fräsers 5 in einem Bereich seitlich neben der durch die Mitte 18 des Hublagerzapfens 8 und die Rotationsachse 4 des Fräsers aufgespannten Ebene liegt.

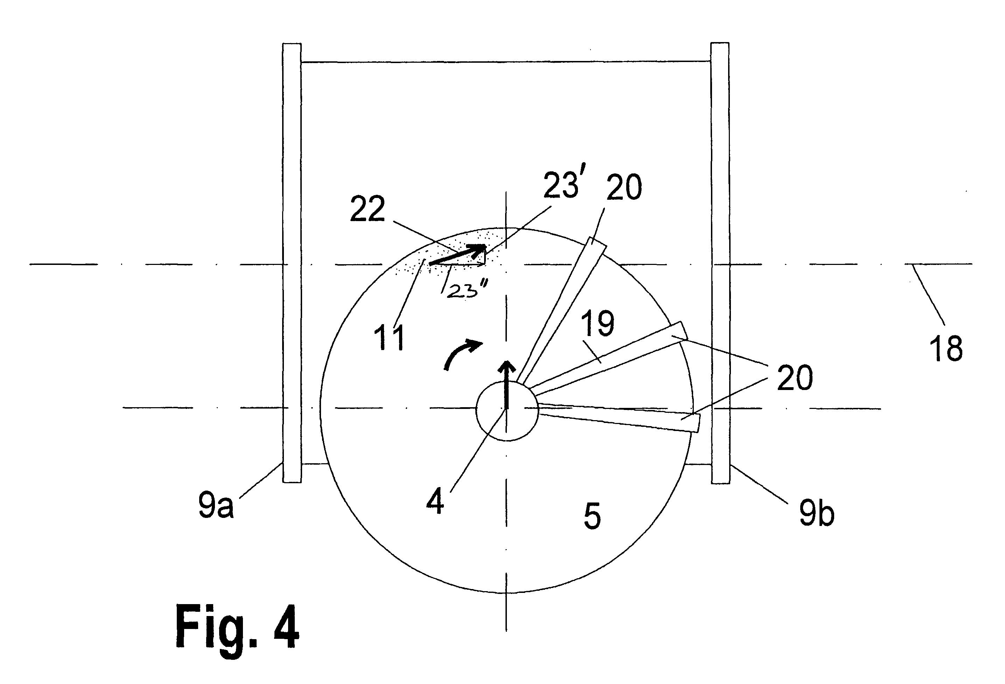

Dadurch ergibt sich eine günstigere Krafteinleitung, wie im einzelnen in Fig. 4 dargestellt.

Wie durch die einzelnen Bewegungsphasen der Fig. 1 dargestellt, wird der gesamte Umfang des Hublagerzapfens 8 durch die Stirnfläche des Fräsers 5
- und bei Bedarf die angrenzenden Wangenflächen 10 durch die Schneiden auf der Mantelfläche des Fräsers 5
- bearbeitet, indem die Kurbelwelle 1 langsam um die Spindelachse 3 mittels der Spannvorrichtung 14, die in der Regel ein Backenfutter ist, gedreht wird.

In Abhängigkeit davon wird der Fräser 5 jeweils so in X- und Y-Richtung mitbewegt, daß die Stirnfläche des Fräsers 5 etwa in der horizontalen Ebene, die durch die Mitte 18 des Hublagerzapfens 8 verläuft, an der Bearbeitungsstelle 11 bearbeitet wird.

Zu diesem Zweck ist der Fräser 5 in einem Fräser-Support 6a drehend antreibbar aufgenommen, welcher gegenüber dem Fräser-Support 6b vertikal verfahrbar ist, und wobei der Fräser-Support 6b in X-Richtung gegenüber dem Maschinenbett 12 verfahrbar ist.

Die Dimensionierung der Länge des Fräsers 5 bzw. der Ausgrabung der Fräser-Supporte 6a und 6b in X- und Y-Richtung muß so bemessen sein, daß bei der in Y-Richtung höchsten und niedrigsten Position des Hublager-Zapfens 8 die Stirnfläche des Fräsers 5 die Bearbeitungsstelle 11 ebenso erreichen kann, wie bei der in X-Richtung nächstliegenden bzw. am weitesten entfernt liegenden Position des Hublager-Zapfens 8 gegenüber dem Fräser 5.

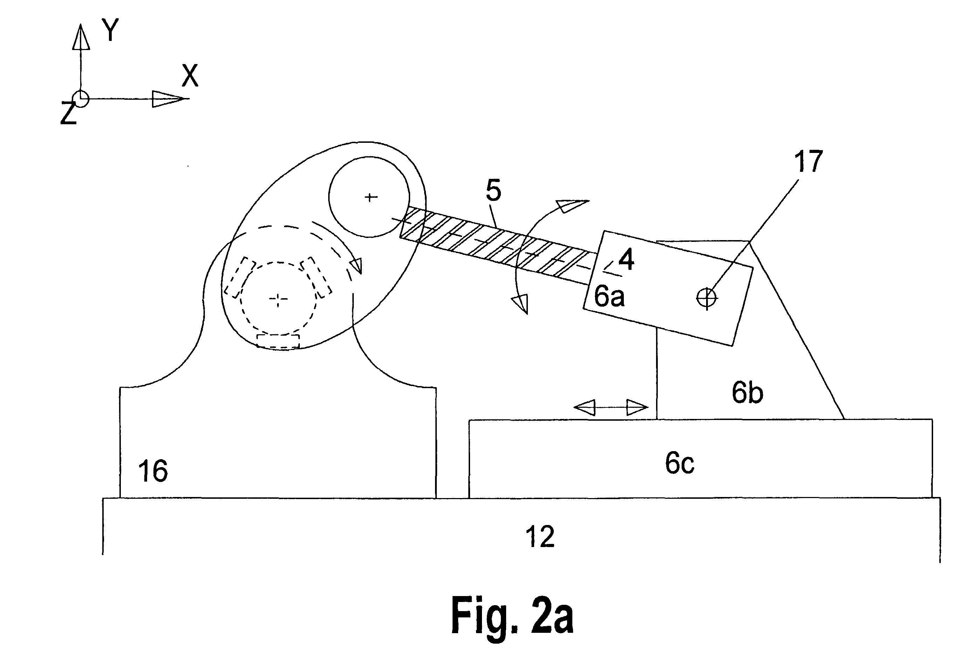

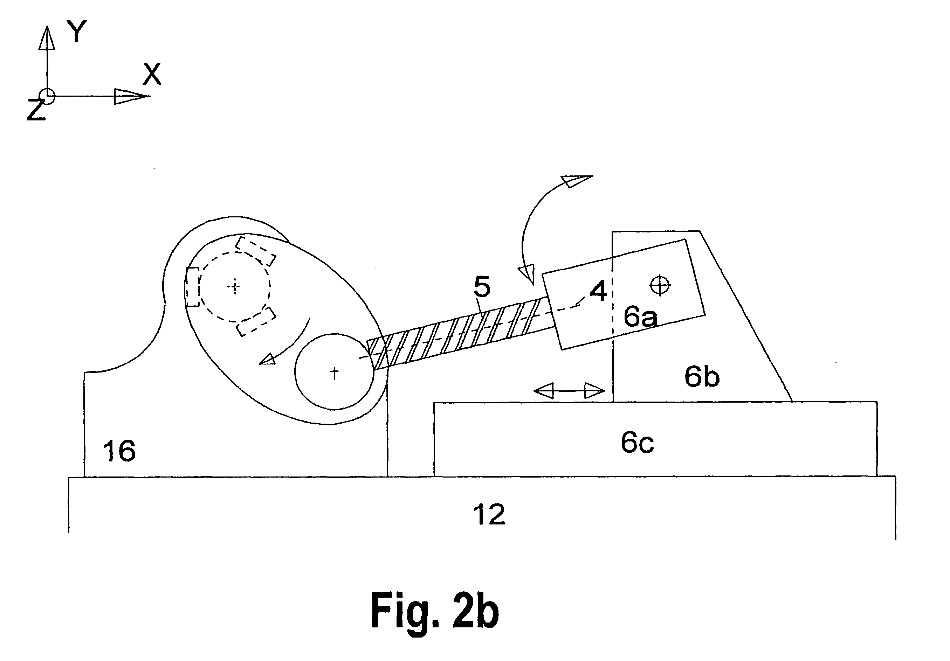

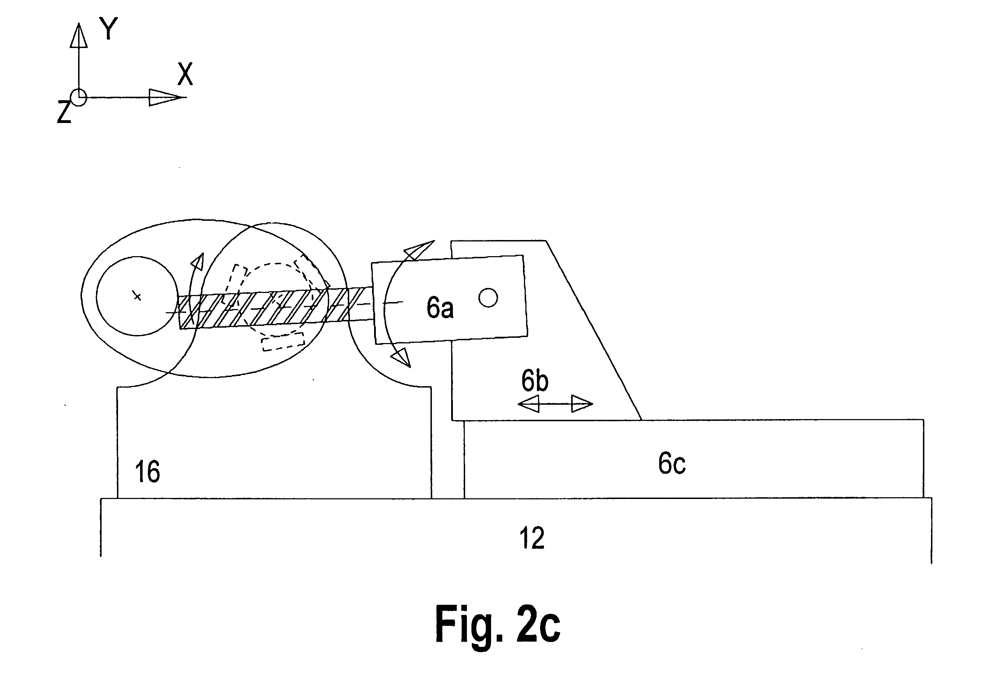

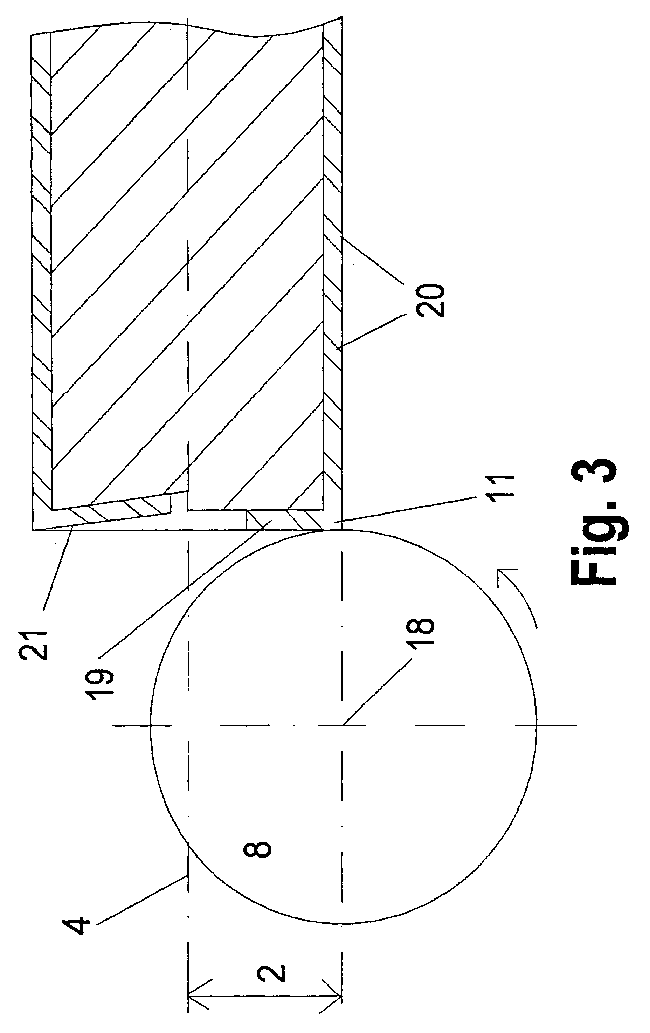

Demgegenüber ist in den Figuren 2 eine andere konstruktive Lösung dargestellt, bei der der Fräser 5 mit den ihn antreibenden und aufnehmenden Fräser-Support 6a um eine Schwenkachse 17, die parallel zur Spindelachse 3 verläuft und demgegenüber in X-Richtung versetzt auf etwa der gleichen Höhe angeordnet ist, gegenüber dem Fräser-Support 6b um einen begrenzten Bereich verschwenkbar ist. Zusätzlich ist auch hier der Fräser-Support 6b in X-Richtung gegenüber dem Maschinenbett 12 linear verfahrbar.

Dadurch ist ebenfalls die Bearbeitung des gesamten Umfanges des Hublager-Zapfens 8 während einer der langsam durchgeführten Drehungen der Kurbelwelle 1 um die Spindelachse 3, also die Mitte der Mittellager-Zapfen 7, möglich.

Wie den Figuren zu entnehmen, liegt die Fräserachse 4 dabei waagerecht, wenn sich der Hublager-Zapfen 8 in der im Fräser-Support 6a, 6b nächstliegenden Position befindet, sowie in der demgegenüber um 180° verdrehten, am weitesten entfernten Position, sofern die Schwenkachse 17 sich bei dieser Lösung auf bzw. im Abstand 2 unter der Höhe der Spindelachse 3 befindet. Dies ist jedoch nicht unbedingt erforderlich, so daß die Schwenkachse 17 auch durchaus höher oder niedriger liegen kann.

Die Größe des maximal möglichen Schwenkwinkels des Fräsers 5 um die Schwenkachse 17 hängt von dem Abstand zwischen der Schwenkachse 17 und der Stirnfläche des Fräsers 5 sowie dem Hub der Kurbelwelle ab.

Auch im Falle der Figuren 2 müssen sowohl die Schwenkbewegung um die Schwenkachse 17 als auch die Linearbewegung in X-Richtung durch den Fräser-Support 6 in Abhängigkeit von der Winkellage der C-Achse, also der Bewegung der Kurbelwelle 1 um die Spindelachse 3 gesteuert und nachgeführt werden.

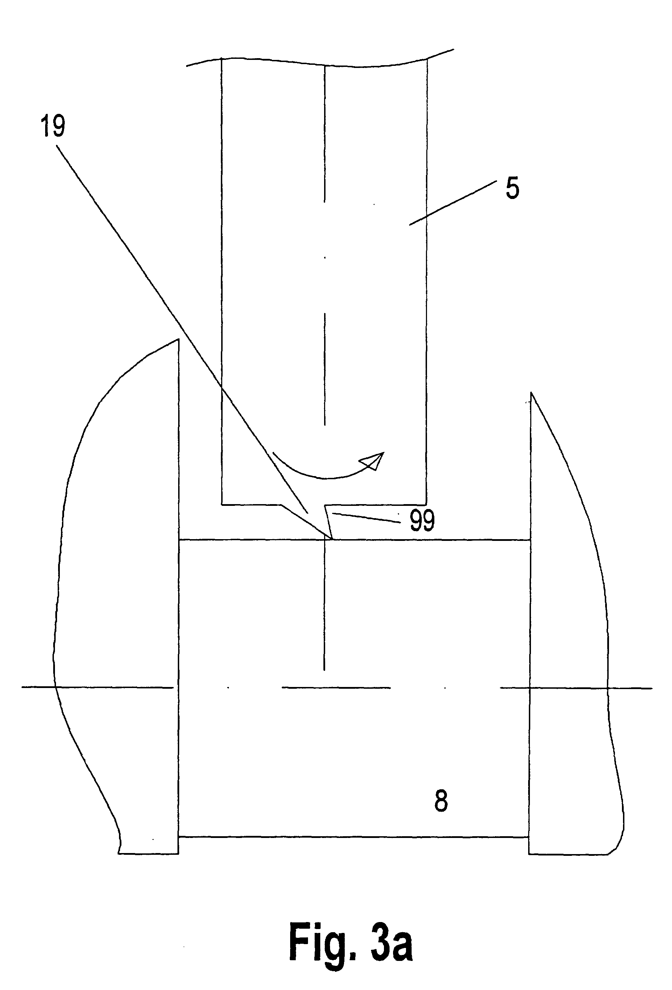

Fig. 3 zeigt eine Detailvergrößerung aus Fig. 1 mit der Änderung, daß in Fig. 3 die Rotationsachse 4 des Fräsers 5 gegenüber der Mitte 18 des Hublagerzapfens 8 um den Abstand 2 nach oben anstatt nach unten versetzt ist.

Dies würde man wählen, wenn die Drehung der Kurbelwelle 1 gegen den Uhrzeigersinn erfolgen würde, da somit der tiefste Punkt der Stirnfläche des Fräsers 5 mit seinen Stirnschneiden 19 jeweils als Erstes in Kontakt mit der Mantelfläche des Hublager-Zapfens 8 gerät

In Blickrichtung der Fräser-Achse 3, wie in Fig. 4 dargestellt, würde sich damit etwa eine bogensegmentförmige Gestaltung der Bearbeitungsstelle 11 ergeben.

Um zusätzlich sicherzustellen, daß ein Schnitt nur am äußersten Umfang der Stirnfläche des Fräsers 4 auftritt - abgesehen vom Schnitt durch die Mantelschneiden 20, die bei Bedarf die angrenzenden Wangenflächen bearbeiten - kann die Stirnfläche des Fräsers 5 konkav zur Mitte hin kegelförmig abgesenkt sein, wobei ein äußerst geringer Winkel 21 zwischen der Radialebene zur Rotationsachse des Fräsers 4 und der Richtung der Stirnschneiden 19 bereits ausreichend ist.

Wie in Fig. 4 in Blickrichtung der Rotationsachse 4 des Fräsers 5 zu erkennen, wird die durch die Stirnschneiden 19 in den Hublager-Zapfen 8 eingeleitete Kraft hinsichtlich ihrer Richtung in einer Tangentialebene des Hublagerzapfens 8 durch die Bearbeitungsstelle 11 liegen, und dabei sowohl eine Komponente 23' in Y-Richtung als auch eine Komponente 23'' in Z-Richtung aufweisen. Das Bestreben geht dahin, die Größe der Komponente 23'' in Z-Richtung gegenüber der Komponente 23' in Y-Richtung zu maximieren, also einen möglichst großen Anteil der einzuleitenden Kräfte in Längsrichtung der Kurbelwelle einzuleiten, anstelle in deren Querrichtung, da aufgrund der höheren Stabilität der Kurbelwelle in Längsrichtung dabei weniger Deformierungen zu befürchten sind.

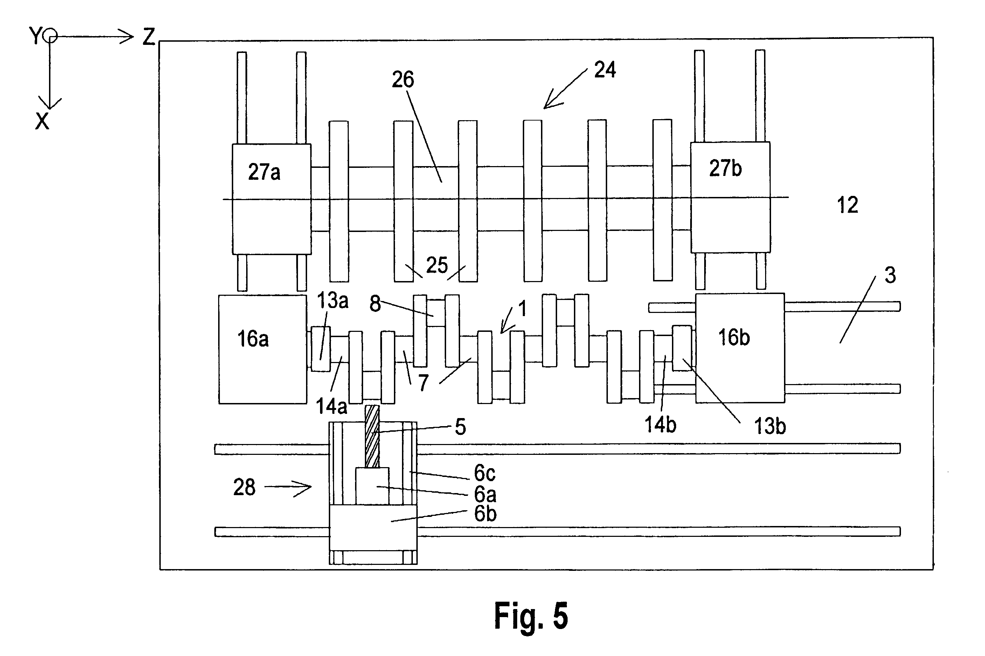

Fig. 5 zeigt in der Aufsicht eine Maschine zum Fertigbearbeiten von Kurbelwellen in einer Aufspannung.

Die Kurbelwelle 1 wird dabei mit ihren Endzapfen, die mit den Mittellager-Zapfen fluchten, beidseits in Spannvorrichtungen 14a, 14b aufgenommen, und über diese drehend und mit gesteuerter C-Achse angetrieben.

Die Spannvorrichtungen 14a, 14b sind auf zueinander fluchtenden, gegeneinander gerichteten Spindeln 13a, 13b aufgenommen, die in jeweils einem Spindelstock 16a, 16b gelagert sind. Dabei ist vorzugsweise einer der Spindelstöcke (16b) in Z-Richtung verfahrbar, um Werkstücke unterschiedlicher Länge aufnehmen zu können.

Für die Bearbeitung der Mittellagerstellen 7 und der angrenzenden Wangenflächen 9 ist dabei neben der Kurbelwelle 1 eine Dreh-Drehräum-Einheit 24 auf dem Maschinenbett 12 angeordnet, die vorzugsweise mehrere Dreh-Drehräumwerkzeuge 25 nebeneinander entsprechend der Anzahl der Mittellager-Zapfen 7 umfaßt, aber auch nur ein einziges solches Werkzeug 25 aufweisen kann. Die Dreh-Drehräum-Einheit 24 ist um eine Achse 26, die parallel zur Spindelachse 3 angeordnet ist, schwenkbar gelagert und stirnseitig in Drehräum-Supporten 27a, 27b gelagert, die synchron, wenigstens in X-, vorzugsweise jedoch auch in Z-Richtung verfahrbar sind.

Gleichzeitig oder auch nach der Bearbeitung der Kurbelwelle 1 durch die Dreh-Drehräum-Einheit 24 kann mittels der Dreh-Fräs-Einheit 28, die auf der von der Dreh-Drehräum-Einheit gegenüberliegenden Seite der Spindelachse 3 angeordnet ist, die Bearbeitung der Hublager-Zapfen 8 und ggf. der dabei angrenzenden Wangenflächen 10 erfolgen, wobei in der Regel heute Wangenflächen überhaupt nicht mehr spanend bearbreitet werden.

Dabei muß die Stirn-Drehfräs-Einheit 28 nicht exakt der Dreh-Drehräum-Einheit 24 zur konventionellen Bearbeitung der Mittellager-Zapfen 7 gegenüberliegen, sondern es kann sich dabei auch um eine winklige Lage der beiden Angriffsrichtungen an der Kurbelwelle zueinander handeln.

Die Stirn-Drehfräs-Einheit 28 besteht dabei aus einem mehrteiligen Fräser-Support, wobei der Fräser-Support 6c entlang des Maschinenbettes 12 in Z-Richtung verfahrbar ist, und auf diesem Support 6c ein Fräser-Support 6b in X-Richtung, also radial auf die Kurbelwelle zu bzw. von dieser weg, verfahren werden kann.

An dem Fräser-Support 6b ist wiederum ein Fräser-Support 6a in Y-Richtung linear verfahrbar, in welchem der Fräser im wesentlichen radial auf die Kurbelwelle zu weisend drehend und treibbar aufgenommen ist.

Selbstverständlich müssen die Bewegungsrichtungen der einzelnen Supporte nicht exakt in X-, Y-usw. -Richtung liegen, jedoch erleichtert dies die Auslegung der Steuerung.

Fig. 3a zeigt in der in Fig. 3 angegebenen Blickrichtung IIIa-IIIa das Einwirken der stirnseitigen Schneide 19 des Fräsers 5 auf die Mantelfläche des Hublagerzapfens 8.

Dabei ist zu erkennen, daß der Winkel 99 zwischen der zu bearbeitenden Werkstückfläche und der Stirnseite der Schneide größer als 90° ist, also eine sogenannte positive Schneidengeometrie gegeben ist. Der Winkel 99 bewegt sich dabei im Bereich zwischen vorzugsweise 90° und 100°.

## Patentansprüche

1. Verfahren zum Bearbeiten von Werkstücken (1) mit bezüglich seiner Längsachse sowohl zentrischen (7) als auch exzentrischen (8), konvex gekrümmten, z. B. rotationssymmetrischen, Werkstückflächen, wobei
- das Werkstück (1) um eine in Längsrichtung der Werkstückachse liegende Spindelachse (3) drehend antreibbar gespannt ist,
- die Bearbeitung der exzentrischen Werkstückflächen (8) mittels Stirnfräsen geschieht, wobei die Rotationsachse (4) des Fräsers (5) quer zur Spindelachse (3) steht (Drehfräsen),
**dadurch gekennzeichnet, dass**
a) die zentrischen gekrümmten Flächen (7) mittels Drehräumen oder Dreh-Drehräumen bearbeitet werden und
b) das Werkstück in einer Aufspannung spanend fertig bearbeitet wird.

2. Verfahren nach Anspruch 1,
**dadurch gekennzeichnet, dass**
bei der Bearbeitung der exzentrischen, im wesentlichen rotationssymmetrischen Flächen (8) der Abstand (2) von der Rotationsachse des Fräsers (4) zur Bearbeitungsstelle (11) möglichst groß ist.

3. Verfahren nach einem der vorhergehenden Ansprüche,
**dadurch gekennzeichnet, dass**
die Rotationsachse (4) des Fräsers gegenüber der momentanen Bearbeitungsstelle (11) am Werkstück in der Rotationsrichtung des Werkstückes tangential versetzt ist.

4. Verfahren nach einem der vorhergehenden Ansprüche,
**dadurch gekennzeichnet, dass**
die Rotationsachse (4) des Fräsers (5) im rechten Winkel zur Spindelachse (3) steht.

5. Verfahren nach einem der vorhergehenden Ansprüche,
**dadurch gekennzeichnet, dass**
die an die zentrischen rotationssymmetrischen Flächen (7) angrenzenden, radial zur Spindelachse (3) verlaufenden Wangenflächen (9) mittels Drehen, Drehräumen und/oder Dreh-Drehräumen bearbeitet werden.

6. Verfahren nach einem der vorhergehenden Ansprüche,
**dadurch gekennzeichnet, dass**
die an die exzentrischen rotationssymmetrischen Flächen (8) angrenzenden, radial zur Spindelachse (3) verlaufenden Wangenflächen (10) mittels Drehfräsen bearbeitet werden.

7. Verfahren nach einem der vorhergehenden Ansprüche,
**dadurch gekennzeichnet, dass**
die Bearbeitung der im wesentlichen rotationssymmetrischen Flächen (7, 8) gleichzeitig mit der Bearbeitung der angrenzenden radialen Wangenflächen (9, 10) geschieht.

8. Verfahren nach einem der vorhergehenden Ansprüche,
**dadurch gekennzeichnet, dass**
zum Bearbeiten der Werkstückflächen mittels Drehfräsen der Fräser (5) in Abhängigkeit von der Drehlage des Werkstückes (1) in wenigstens einer Querrichtung zur Längsachse des Werkstückes (1) linear verfahrbar ist und um eine parallel zur Längsachse des Werkstückes (1) liegende C2-Achse (17) begrenzt verschwenkbar ist, wobei die Länge des Fräsers (5) und die Schwenkmöglichkeit so dimensioniert sind, daß der Fräser (5) mit seiner Stirnfläche die zu bearbeitende Werkstückfläche (8) in jeder ihrer Drehlagen erreichen kann.

9. Maschine zum Bearbeiten von Werkstücken mit bezüglich ihrer Längsachse sowohl zentrischen (7) als auch exzentrischen (8), konvex gekrümmten, z. B. rotationssymmetrischen, Werkstückflächen, insbesondere zur Durchführung des Verfahrens nach einem der vorhergehenden Ansprüche, mit
- einem Maschinenbett (12),
- wenigstens einer drehend antreibbaren Werkstück-Spindel (13),
- wenigstens einer Spannvorrichtung (14) für das Werkstück (1),
- einem C-Achs-Antrieb und
- wenigstens einer Fräseinheit, wobei die Fräseinheit eine Stirn-Drehfräs-Einheit ist, indem
- der Fräser (5) in einem Fräser-Support (6) drehend antreibbar aufgenommen ist, welcher Bewegungen vollziehen kann, die sowohl Komponenten in X-Richtung als auch in Y-Richtung aufweisen können,
- die Maschine eine Steuerung aufweist, die eine Positionierung und ein Verfahren des Fräser-Supportes (6) und damit des Fräsers (5) in Abhängigkeit von der Positionierung und dem Verfahren der C-Achse und damit der exzentrisch von der Stirn-Drehfräs-Einheit zu bearbeitenden Flächen (8) ermöglicht,
**dadurch gekennzeichnet, dass**
die Maschine wenigstens eine Drehräumeinheit oder Dreh-Drehräumeinheit aufweist.

10. Maschine nach Anspruch 9,
**dadurch gekennzeichnet, dass**
- der Fräser-Support (6) in einer Querrichtung zur Längsachse des Werkstückes linear verfahrbar ist und der Fräser (5) gegenüber dem Fräsersupport (6) um eine parallel zur Längsrichtung des Werkstückes (1) liegende C2-Achse (17) schwenkbar ist und
- die maximale Schwenkbarkeit des Fräsers um die C2-Achse (17) als auch die Länge des Fräsers (5) so dimensioniert sind, daß der Fräser (5) mit seiner Stirnfläche die zu bearbeitende Werkstückfläche in jeder ihrer möglichen Drehlagen erreichen kann.

11. Maschine nach Anspruch 9 oder 10,
**dadurch gekennzeichnet, dass**
die die Stirnschneiden (19) aufweisende Stirnfläche des Fräsers (5) konkav zur Mitte dieser Stirnfläche hin abgesenkt ist.

12. Maschine nach Anspruch 11,
**dadurch gekennzeichnet, dass**
der Winkel (21) der Absenkung in der Stirnfläche des Fräsers (5) ein äußerst geringer Winkel ist.

## Claims

1. A method of machining workpieces (1) with convexly curved, for example rotationally symmetrical workpiece surfaces which are both concentric (7) and also eccentric (8) with respect to their longitudinal axis, wherein
- the workpiece (1) is clamped rotatably drivably about a spindle axis (3) which is in the longitudinal direction of the workpiece axis, and
- machining of the eccentric workpiece surfaces (8) is effected by means of end-mining wherein the axis of rotation (4) of the milling cutter (5) is transverse with respect to the spindle axis (3) (rotational mining),
**characterized in that**
a) the concentric curved surfaces (7) are machined by means of rotational broaching and/or turning-rotational broaching, and
b) the workpiece is subjected to cutting finishing machining in a clamping means.

2. A method according to claim 1 **characterized in that** in machining of the eccentric, substantially rotationally symmetrical surfaces (8) the spacing (2) from the axis of rotation of the mining cutter (4) to the machining location (11) is as large as possible.

3. A method according to one of the preceding claims
**characterized in that** the axis of rotation (4) of the milling cutter is tangentially displaced relative to the instantaneous machining location (11) on the workpiece in the direction of rotation of the workpiece.

4. A method according to one of the preceding claims
**characterized in that** the axis of rotation (4) of the milling cutter (5) is at a right angle to the spindle axis (3).

5. A method according to one of the preceding claims
**characterized in that** the side cheek portion surfaces (9) which adjoin the concentric rotationally symmetrical surfaces (7) and which extend radially relative to the spindle axis (3) are machined by means of turning, rotational broaching and/or turning-rotational broaching.

6. A method according to one of the preceding claims
**characterized in that** the side cheek portion surfaces (10) which adjoin the eccentric rotationally symmetrical surfaces (8) and which extend radially with respect to the spindle axis (3) are machined by means of rotational milling.

7. A method according to one of the preceding claims
**characterized in that** machining of the substantially rotationally symmetrical surfaces (7, 8) is effected simultaneously with machining of the adjoining radial side cheek portion surfaces (9, 10).

8. A method according to one of the preceding claims
**characterized in that** for machining of the workpiece surfaces by means of rotational milling the milling cutter (5) is linearly displaceable in dependence on the rotational position of the workpiece (1) in at least one transverse direction relative to the longitudinal axis of the workpiece (1) and is limitedly pivotable about a C2-axis (17) which is parallel to the longitudinal axis of the workpiece (1), wherein the length of the milling cutter (5) and the pivotability are of such a dimension that the milling cutter (5) with its end face can reach the workpiece surface (8) to be machined in any of the rotational positions of the latter.

9. A machine for machining workpieces with convexly curved, for example rotationally symmetrical workpiece surfaces which are both concentric (7) and also eccentric (8) with respect to their longitudinal axis. in particular for carrying out the method according to one of the preceding claims, comprising:
- a machine bed (12),
- at least one rotatably drivable workpiece spindle (13),
- at least one clamping device (14) for the workpiece (1),
- a C-axis drive, and
- at least one milling unit, wherein the milling unit is an rotational end milling unit, in that
- the mining cutter (5) is rotatably drivably carried in a mining cutter support (6) which can perform movements which can have both components in the X-direction and also in the Y-direction, and
- the machine has a control which permits positioning and displacement of the milling cutter support (6) and therewith the milling cutter (5) in dependence on the positioning and the displacement of the C-axis and therefore of the eccentric surfaces to be processed by the end milling unit,
**characterized in that** the machine has at least one rotational broaching unit and/or turning-rotational broaching unit.

10. A machine according to claim 9 **characterised in that**
- the milling cutter support (6) is linearly displaceable in a transverse direction relative to the longitudinal axis of the workpiece and the milling cutter (5) is pivotable relative to the milling cutter support (6) about a C2-axis (17) which is parallel to the longitudinal direction of the workpiece (1), and
- the maximum pivotability of the milling cutter about the C2-axis (17) and also the length of the milling cutter (5) are so dimensioned that the milling cutter (5) can with its end face reach the workpiece surface to be machined in any of the possible rotational positions thereof.

11. A machine according to claim 9 or claim 10 **characterized in that** the end face of the milling cutter (5), which has the cutting edges (19) is concavely recessed towards the middle of said end face.

12. A machine according to claim 11 **characterized in that** the angle (21) of the recess in the end face of the milling cutter (5) is an extremely small angle.

## Revendications

1. Procédé pour l'usinage de pièces (1) dont les surfaces sont aussi bien centrées (7) par rapport à leur axe longitudinal qu'excentriques (8), courbée de manière convexe, par exemple symétriques en rotation,
- la pièce (1) étant serrée et entraînée en rotation autour d'un axe de broche (3) se trouvant dans le sens longitudinal de l'axe de la pièce,
- l'usinage des surfaces excentriques d'outil (8) étant effectué au moyen de fraises à surfacer, l'axe de rotation (4) de la fraise (5) étant perpendiculaire à l'axe de la broche (3) (fraises rotatives),
**caractérisé en ce que**
a) les surfaces incurvées centrées (7) sont usinées par brochage rotatif, et/ou par brochage rotatif-rotatif (rotation de la pièce et de la broche)
b) la pièce est usinée dans une fixation par enlèvement de copeaux.

2. Procédé selon la revendication 1, **caractérisé en ce que** lors de l'usinage des surfaces excentriques (8) sensiblement symétriques en rotation, la distance (2) entre l'axe de rotation (4) de la fraise et le point d'usinage (11) est la plus grande possible.

3. Procédé selon l'une des revendications précédentes, **caractérisé en ce que** l'axe de rotation (4) de la fraise est décalé tangentiellement par rapport au point momentané d'usinage sur la pièce dans le sens de rotation de la pièce.

4. Procédé selon l'une des revendications précédentes, **caractérisé en ce que** l'axe de rotation (4) de la fraise (5) forme un angle droit avec l'axe de broche (3).

5. Procédé selon l'une des revendications précédentes, **caractérisé en ce que** les surfaces de cRté (9), s'étendant radialement à l'axe de broche (3) et attenantes aux surfaces centrées (7) symétriques en rotation, sont usinées au tour, par brochage rotatif et/ou par brochage rotatif-rotatif.

6. Procédé selon l'une des revendications précédentes, **caractérisé en ce que** les surfaces de cRté (10) attenantes et s'étendant radialement à l'axe de broche (3) aux surfaces excentriques (8) symétriques en rotation, sont usinées au moyen de fraises rotatives.

7. Procédé selon l'une des revendications précédentes, **caractérisé en ce que** l'usinage des surfaces (7, 8) sensiblement symétriques en rotation s'effectue en même temps que l'usinage des surfaces radiales de cRté (9, 10) attenantes.

8. Procédé selon l'une des revendications précédentes, **caractérisé en ce que** pour l'usinage de surfaces de pièces au moyen de fraises rotatives, la fraise (5) est mobile linéairement en fonction de la position en rotation de la pièce (1) dans au moins une direction transversale à l'axe longitudinal de la pièce (1) et peut pivoter de manière limitée autour d'un axe C2 (17) se trouvant parallèlement à l'axe longitudinal de la pièce (1), la longueur de la fraise
(5) et la possibilité de pivotement étant dimensionnées pour que la fraise (5) puisse atteindre avec sa face avant la surface (8) à usiner de la pièce dans chacune de ses positions de rotation.

9. Machine pour l'usinage de pièces dont les surfaces sont aussi bien centrées (7) par rapport à leur axe longitudinal qu'excentriques (8), courbées de manière convexe, par exemple symétriques en rotation, en particulier pour la mise en oeuvre du procédé selon l'une des revendications précédentes, comprenant
- un lit de machine (12),
- au moins une broche porte-pièce (13) entraînée en rotation,
- au moins un dispositif de serrage pour la pièce (1),
- un entraînement de l'axe C et
- au moins une unité formant fraise, l'unité formant fraise étant une unité formant fraise rotative frontale,
- la fraise (5) étant logée entraînée en rotation dans un porte-fraises (6) qui peut effectuer des déplacements pouvant présenter des composantes aussi bien dans le sens des X que dans le sens des Y,
- la machine présentant une commande qui permet un positionnement et un déplacement du porte-fraises (6) et ainsi de la fraise (5) en fonction du positionnement et du déplacement de l'axe C et ainsi des surfaces à usiner (8) excentriquement par l'unité avant des fraises-rotatives,
**caractérisé en ce que**
la machine présente une unité rotative à brocher et/ou une unité rotative-rotative à brocher (rotation de la pièce et de la broche).

10. Machine selon la revendication 9, **caractérisé en ce que**
- le porte-fraise (6) est mobile linéairement dans une direction transversale par rapport à l'axe longitudinal de la pièce et la fraise (5) pivote par rapport au porte-fraises
(6) autour d'un axe C2 (17) parallèle à la direction longitudinale de la pièce (1).
- le pivotement maximal de la fraise autour de l'axe C2 (17) et la longueur de la fraise (5) sont dimensionnés pour que la fraise (5) puisse atteindre par sa face avant la surface à usiner de la pièce dans chacune de ses positions possibles de rotation.

11. Machine selon la revendication 9 ou 10, **caractérisé en ce que** les surfaces avant de la fraise (5), présentant les lames avant (19), sont creusées de manière concave en direction de cette surface avant.

12. Machine selon la revendication 11, **caractérisé en ce que** l'angle (21) de creusement dans la surface avant de la fraise (5) est un angle extrêmement faible.
